# EUROPÄISCHE PATENTSCHRIFT

(11) **EP 3 936 002 B1**
(45) Veröffentlichungstag und Bekanntmachung des Hinweises auf die Patenterteilung: **23.10.2024**
(21) Anmeldenummer: 20210589.6
(22) Anmeldetag: 30.11.2020
(51) Int. Cl.: A47B 96/02, F25D 25/02

(54) **KLIMASCHRANK MIT EINLEGEBODEN**
CLIMATIC CABINET WITH SHELVES
ARMOIRE DE CLIMATISATION POURVUE D'UNE TABLETTE DE RAYONNAGE

(30) Priorität: 21.02.2020 DE 102020001162
(43) Veröffentlichungstag der Anmeldung: 12.01.2022
(73) Patentinhaber: Thermo Electron LED GmbH, 63505 Langenselbold (DE)
(72) Erfinder: AULBACH, Holger, 63505 Langenselbold (DE); KABUS, Christopher, 63505 Langenselbold (DE); FANTA, Patrick, 63505 Langenselbold (DE); SCHUCK, Rainer, 63505 Langenselbold (DE)
(74) Vertreter: Ziermann, Oliver

(56) Entgegenhaltungen:
- CN-U- 206 891 016
- DE-A1- 4 227 828
- JP-A- H11 118 347
- JP-B2- 3 354 041
- KR-A- 20070 109 517
- US-A- 3 556 306
- US-A1- 2016 367 047

## Beschreibung

Die Erfindung betrifft einen Klimaschrank mit wenigstens einem Einlegeboden. Unter einem Klimaschrank soll im Rahmen der Erfindung ein Lager- oder Bearbeitungsschrank verstanden werden, wie er insbesondere in Laboratorien dazu verwendet wird, Geräte, Probenbehältnisse oder ähnliches bei einer bestimmten Temperatur oder in einem bestimmten Temperaturbereich zu behandeln, also beispielsweise zu lagern und/oder zu bearbeiten. Beispiele solcher Klimaschränke sind Trockenschränke/Laboratoriumsöfen, Autoklaven und Inkubatoren, einschließlich Begasungsbrutschränken, Kühl- und Gefriergeräte, insbesondere Laborkühlschränke und Laborgefriergeräte. In vielen dieser Geräte werden biologische oder mikrobiologische Proben in einer Klimakammer des Klimaschrankes aufbewahrt, in einem Inkubator zum Beispiel bei einer vorgegebenen Temperatur, beispielsweise 37 °C, und gleichzeitig geregelter Feuchtigkeit sowie - im Falle von Begasungsbrutschränken - einer geregelten Gasatmosphäre inkubiert.

Zur Lagerung der Geräte und/oder Probenbehältnisse ist die Klimakammer mit wenigstens einem Einlegeboden ausgestattet. Der Einlegeboden weist eine ebene Bodenplatte mit einer Stellfläche auf, auf die die in der Klimakammerzu lagernden oder bearbeitenden Gegenstände gestellt bzw. gelegt werden. Um eine gleichmäßige Temperaturverteilung innerhalb der Klimakammer zu erreichen, ist die Bodenplatte häufig mit Durchgangsöffnungen versehen und weist beispielsweise entweder die Form einer Lochplatte oder eines Gitters auf. In der Regel besteht der Einlegeboden aus Metall, beispielsweise aus Edelstahl, verchromtem Stahl oder Kupfer. In seiner Größe entspricht er in etwa dem Innenquerschnitt der Klimakammer in waagerechter Richtung und ist üblicherweise in seinem Randbereich an Halterungen an der Rückwand und/oder Seitenhalterungen gehaltert, die an gegenüberliegenden Seitenwänden im Inneren der Klimakammer angebracht sind. Der Einlegeboden kann meist durch eine mit einer Tür verschließbare Frontöffnung des Klimaschrankes aus der Klimakammer entnommen werden, beispielsweise um gereinigt zu werden.

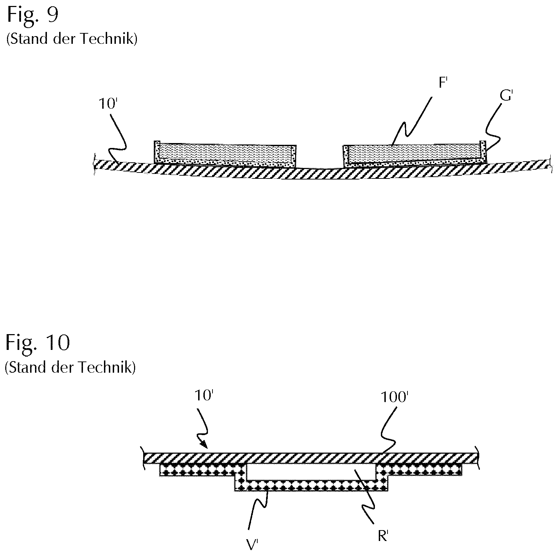

Im Falle der Lagerung biologischer oder mikrobiologischer Proben im Klimaschrank muss nicht nur die Klimakammer selbst, sondern auch der Einlegeboden in regelmäßigen Abständen desinfiziert werden, um anhaftende Keime unschädlich zu machen. Schwer zugängliche Bereiche erschweren dabei eine gründliche Desinfektion. Solche schlecht zugänglichen Bereiche existieren im Falle eines herkömmlichen Einlegebodens dort, wo er mit einer Verstärkung versehen ist, um die Tragfähigkeit des Einlegebodens zu erhöhen. Ein Problem mit der Tragfähigkeit des Einlegebodens tritt vor allem bei einer großflächigen Bodenplatte auf - wie in Fig. 9 veranschaulicht. Wird die Bodenplatte 10' mit vielen und/oder schweren Gegenständen G' belastet, biegt sie sich in ihrem Mittelbereich nach unten durch. Dies führt dazu, dass die Gegenstände in diesem Bereich nicht mehr geradestehen. Handelt es sich bei den Gegenständen um Probengefäße wie beispielsweise Petrischalen oder Mikrotiterplatten, führt die Neigung dazu, dass die Füllhöhe im Gefäß nicht gleichmäßig ist, sodass die Bedingungen für die Proben über die Fläche des Probengefäßes nicht exakt identisch sind. Bei sehr großen Probengefäßen mit geringer Füllhöhe ist im Extremfall ein Teilbereich des Probengefäßes gar nicht mehr mit Probenmedium bedeckt. Die ungleichmäßige Füllhöhe kann in einer Verfälschung der Ergebnisse resultieren. Gegebenenfalls kann die Neigung bei hohem Füllstand auch dazu führen, dass Probenflüssigkeit F' über den Rand des Probengefäßes läuft. Dies führt nicht nur zu einem Verlust an Probe, sondern zur Verunreinigung der Klimakammer und gegebenenfalls zur Kontamination anderer Proben, mit der Folge, dass alle in der Klimakammer enthaltenen Proben verworfen werden müssen. Um dies zu verhindern, ist es bekannt, Einlegeböden für Klimaschränke aus einem dickeren Material zu fertigen. Dadurch lässt sich zwar die Verbiegung der Bodenplatte etwas reduzieren, jedoch auf Kosten höheren Eigengewichts, geringerer Zuladung ins Klimagerät sowie höherer Fertigungskosten. Eine andere, in Fig. 10 dargestellte Möglichkeit sieht Einlegeböden vor, bei denen an der der Stellfläche 100' der Bodenplatte 10' gegenüberliegenden Unterseite 101' der Bodenplatte wenigstens ein Versteifungselement V' unlösbar befestigt, beispielsweise angeschweißt, ist. Bekannt sind zum Beispiel streifenförmige Versteifungselemente oder Versteifungselemente in Form einer Wabenstruktur. Diese weisen zwar ein etwas geringeres Gewicht als insgesamt dickere Einlegeböden auf, haben jedoch den Nachteil der sehr aufwändigen und teuren Fertigung. Zudem sind die mit den Versteifungselementen versehenen Einlegeböden in den Kontaktbereichen von Einlegeboden und Versteifungselement sowie in dem schlecht zugänglichen Raum R' zwischen Versteifungselement und Bodenplatte nur schwer zu reinigen und zu desinfizieren. Dies birgt das Risiko einer unbeabsichtigten Kontamination der Klimakammer und der darin gelagerten Gegenstände. Im Stand der Technik sind Kühlschränke mit Bodenplatten bekannt, beispielsweise aus KR 2007 010951 7 A, CN 206 891 016 U JP 3 354041 B2, US 2016/367047 A1 und JP H11 118347 A. Einlegeböden sind bekannt, beispielsweise aus US 3 556 306 A und DE 42 27 828 A1.

**Aufgabe** der vorliegenden Erfindung ist es, einen Klimaschrank mit Einlegeboden anzugeben, der die vorstehenden Nachteile nicht aufweist, und insbesondere eine hohe Tragfähigkeit bei allenfalls geringer Durchbiegung der Bodenplatte bei gleichzeitig guter Reinigungs- und Desinfektionsfähigkeit bereitzustellen.

Die Lösung dieser Aufgabe gelingt mit dem Klimaschrank gemäß Anspruch 1. Bevorzugte Weiterbildungen sind in den abhängigen Ansprüchen beschrieben.

Im Einzelnen betrifft die Erfindung also in ihrem ersten Aspekt einen Klimaschrank mit Einlegeboden, der eine Bodenfläche mit einer Stellfläche für im Klimaschrank zu behandelnde Gegenstände sowie eine der Stellfläche gegenüberliegende Unterseite aufweist. Der Einlegeboden kann, zum Beispiel an einem äußeren Randbereich, in an sich üblicher Weise in einer Klimakammer des Klimaschrankes gehaltert werden. Unter einem Klimaschrank soll dabei, wie eingangs definiert, ein Lager- oder Bearbeitungsschrank verstanden werden, wie er insbesondere in Laboratorien dazu verwendet wird, Geräte, Probenbehältnisse oder ähnliches - nachfolgend allgemein als "Gegenstände" bezeichnet - bei einer bestimmten Temperatur oder in einem bestimmten Temperaturbereich zu behandeln, also beispielsweise zu lagern und/oder zu bearbeiten. Beispiele solcher Klimaschränke sind Trockenschränke/Laboratoriumsöfen, Autoklaven und Inkubatoren, einschließlich Begasungsbrutschränken, Kühl- und Gefriergeräte, insbesondere solche für Laboratorien. Erfindungsgemäß ist an der Bodenplatte wenigstens eine Versteifungsrippe lösbar befestigt. Die lösbare Befestigung der wenigstens einen Versteifungsrippe erlaubt es, diese in einfacher Weise vom Einlegeboden abzunehmen und gesondert von diesem zu reinigen und desinfizieren. Dies erleichtert beide Vorgänge erheblich, da sowohl der Einlegeboden ohne Versteifungselemente als auch die Versteifungsrippe der Reinigung und Desinfektion sehr viel besser zugänglich sind als die versteiften Einlegeböden des Standes der Technik. Einem Desinfektionsvorgang schwer zugängliche oder gar nicht erreichbare verdeckte Stellen können erfindungsgemäß vermieden werden.

Unter einer lösbaren Befestigung soll im Rahmen der Erfindung eine Befestigung von Versteifungsrippe(n) und Einlegeboden aneinander verstanden werden, die ohne von den beiden Komponenten getrennte Befestigungsmittel wie beispielsweise Schrauben auskommt. Dauerhafte Verbindungen wie zum Beispiel Schweiß- oder Lötverbindungen fallen naturgemäß nicht unter eine lösbare Befestigung im Sinne der Erfindung. Einlegeboden und Versteifungsrippe(n) sollten möglichst ohne Zuhilfenahme von Werkzeug voneinander getrennt werden können. Dies schließt jedoch selbstverständlich nicht aus, dass ein Werkzeug wie beispielsweise ein Schraubendreher zur Erleichterung des Lösens der beiden Komponenten voneinander eingesetzt werden kann. Das Werkzeug dient dann jedoch nicht zum Entfernen oder Lockern separater Befestigungsmittel, sondern ausschließlich zum Trennen der Versteifungsrippe(n) von dem Einlegeboden. Bevorzugt wird die wenigstens eine Versteifungsrippe mittels wenigstens einer Rast-, Steck- oder Klemmverbindung lösbar an dem Einlegeboden befestigt. Auch Kombinationen verschiedener Verbindungsarten in ein und demselben Befestigungselement oder die Verwendung unterschiedlicher Arten von Befestigungselementen nebeneinander sind möglich. Dabei ist es grundsätzlich unerheblich, ob sich zum Beispiel ein Rastvorsprung an der Versteifungsrippe oder am Einlegeboden befindet. Möglich ist beispielsweise, mehrere Rastvorsprünge an der Versteifungsrippe vorzusehen und komplementäre Rastvertiefungen oder Rastöffnungen am Einlegeboden. Denkbar ist jedoch auch die umgekehrte Variante oder das Vorsehen von sowohl Rastvorsprüngen als auch Rastvertiefungen/-öffnungen an beiden Komponenten. In analoger Weise können Steckvorsprünge an der Versteifungsrippe und/oder dem Einlegeboden vorgesehen sein, die in passende Öffnungen oder Vertiefungen am Gegenstück eingreifen und die Versteifungsrippe so lösbar am Einlegeboden befestigen. Klemmverbindungen können sich beispielsweise wenigstens einer federnden Lasche oder eines ähnlichen Federelements an einer der Komponenten bedienen, das die andere der Komponenten unter Spannung eingeklemmt. In einer möglichen Variante kann eine über die Bodenplatte des Einlegebodens vorstehende federnde Lasche die Versteifungsrippe gegen einen Anschlag drücken, oder alternativ können zwei Federlaschen eine Versteifungsrippe zwischen sich einklemmen. In einer noch weiteren Variante sind die wenigstens eine Versteifungsrippe und der Einlegeboden magnetisch aneinander befestigt. Dazu enthält eine der beiden Komponenten zweckmäßig wenigstens einen Permanentmagneten, um die magnetische Verbindung zu wenigstens einem an der anderen Komponente angeordneten metallischen Gegenstück oder zu der insgesamt aus einem geeigneten Metall bestehenden anderen Komponente herstellen zu können. In jedem Fall ist die wenigstens eine Versteifungsrippe grundsätzlich nur an dem Einlegeboden lösbar befestigt und nicht zusätzlich an irgendwelchen anderen, von dem Einlegeboden getrennten Bauteilen. Die wenigstens eine Versteifungsrippe weist also insbesondere ausschließlich Befestigungsmittel zur lösbaren Befestigung an dem Einlegeboden auf. Konkret besitzt die wenigstens eine Versteifungsrippe insbesondere keine Befestigungsmittel zu ihrer Befestigung an den die Klimakammer umgebenden Wänden oder an Haltemitteln des Klimaschranks wie Einschubschienen oder sonstigen Trägern, mit denen der Einlegeboden in der Klimakammer gehaltert werden kann. Die wenigstens eine Versteifungsrippe dient ausdrücklich nicht dazu, den Einlegeboden in der Klimakammer zu haltern. Sie ist vielmehr nach ihrer lösbaren Befestigung am Einlegeboden zusammen mit dem Einlegeboden, an diesem befestigt, in die Klimakammer einbringbar und aus dieser entfernbar.

Abgesehen von Änderungen, die die lösbare Befestigung der wenigstens einen Versteifungsrippe ermöglichen, kann der Einlegeboden ansonsten grundsätzlich wie im Stand der Technik ausgebildet sein. Insbesondere kann er die gleichen Halterungsvorrichtungen besitzen wie die bekannten Einlegeböden, sodass er ohne weiteres mit den Haltesystemen der Klimaschränke des Standes der Technik kompatibel ist. Üblich sind beispielsweise Gleitschienen im Bereich der Seitenwände der Klimakammer, auf denen der Einlegeboden mit gegenüberliegenden Randbereichsabschnitten aufliegt. Bevorzugt wird der Einlegeboden aus Metall, zum Beispiel Kupfer oder Stahl, insbesondere Edelstahl, gefertigt, wobei jedoch auch andere Materialien wie beispielsweise temperaturstabile Kunststoffe nicht grundsätzlich ausgeschlossen sind. Um eine gleichmäßige Temperaturverteilung innerhalb der Klimakammer zu erreichen, weist die Bodenplatte des Einlegebodens üblicherweise eine Vielzahl von Öffnungen auf oder ist als Gitter ausgebildet. Der gleiche Grundaufbau des erfindungsgemäßen Einlegebodens ermöglicht gegebenenfalls auch die Nachrüstung von Einlegeböden des Standes der Technik durch nachträglichen Einbau geeigneter Befestigungsmittel zur Aufnahme wenigstens einer lösbar zu befestigen Versteifungsrippe. Ist ein Umbau eines vorhandenen Einlegebodens nicht möglich oder nicht erwünscht, können Klimaschränke des Standes der Technik auch mit einem Einlegeboden nachgerüstet werden, an dem wenigstens eine Versteifungsrippe lösbar befestigbar ist. Der Einlegeboden kann dabei für sich zur späteren Nachrüstung mit wenigstens einer passenden Versteifungsrippe angeboten werden oder bereits in Kombination mit wenigstens einer an ihm lösbar befestigbaren Versteifungsrippe.

Die Form der wenigstens einen Versteifungsrippe ist grundsätzlich nicht weiter beschränkt, solange sie ihre Funktion ausüben kann, das Durchbiegen der Bodenplatte, gegebenenfalls in Kombination mit wenigstens einer weiteren Versteifungsrippe, zu verhindern. In einer Variante ist sie im Wesentlichen stabförmig, bevorzugt als Hohlstab und insbesondere als Hohlkantstab, ausgebildet. In einer alternativen Variante wird die Versteifungsrippe von einem Profil gebildet und ist insbesondere als L-Profil oder U-förmiges Profil ausgebildet, dessen freie Enden bevorzugt in Richtung auf die Bodenplatte weisen. Dadurch ergibt sich ein nach außen geschlossenes Erscheinungsbild bei gleichzeitig hoher Stabilität und geringem Gewicht. Das Material, aus dem die wenigstens eine Versteifungsrippe gefertigt wird, ist nicht besonders beschränkt, sofern es eine ausreichende Biegesteifigkeit und Temperaturbeständigkeit für die beabsichtigte Anwendung besitzt. Beispielhaft kann auf geeignete Kunststoffe und vor allem auf Metall, beispielsweise Kupfer oder Stahl, insbesondere Edelstahl, verwiesen werden. Die Herstellung erfolgt in grundsätzlich bekannter Weise, vorzugsweise aus einem Metallblech durch Ausstanzen, Laserschneiden o. ä., wobei die späteren Befestigungsmittel zweckmäßig gleich mit eingeformt werden und sich insbesondere in den Außenrandbereichen befinden. Form und Abmessung der Versteifungsrippe richten sich in erster Linie nach dem Einlegeboden, mit dem die Versteifungsrippe verwendet werden soll, wobei insbesondere auch die gewünschte Traglast der Bodenplatte zu berücksichtigen ist. Die Länge der Versteifungsrippe ist zweckmäßig ausreichend groß, um eine Durchbiegung der Bodenplatte des Einlegebodens in ausreichender Weise zu verhindern. Bevorzugt verläuft eine Versteifungsrippe daher zweckmäßig zwischen gegenüberliegenden Randbereichsabschnitten des Einlegebodens, sodass die Bodenplatte über ihre gesamte Breite von der Versteifungsrippe stabilisiert wird. Die gegenüberliegenden Randbereichsabschnitte können dabei diejenigen sein, die bei einem in die Klimakammer eines Klimaschrankes eingelegten Einlegeboden zur Frontöffnung und zur Rückwand der Klimakammer hin orientiert sind, oder diejenigen, an denen der Einlegeboden im Bereich der Seitenwände der Klimakammer gehaltert wird.

Welche Anzahl von Versteifungsrippen verwendet wird, hängt in erster Linie von der Größe des Einlegebodens ab. Je größer die Fläche der Bodenplatte ist, desto mehr Versteifungsrippen sollten verwendet werden, um eine Durchbiegung der Bodenplatte unter dem Gewicht der in der Klimakammer zu lagernden Gegenstände sicher zu verhindern. Anzahl und Gewicht der Gegenstände haben ebenfalls einen Einfluss darauf, welche Anzahl von Versteifungsrippen benötigt wird. Zweckmäßig ist der Einlegeboden so ausgebildet, dass die Anzahl an Versteifungsrippen variabel und beispielsweise in Abhängigkeit von der zu erwartenden Beladung der Bodenplatte vom Benutzer ausgewählt werden kann. Außerdem kann der Benutzer auswählen, an welcher Stelle eine Versteifungsrippe befestigt wird. Damit ist beispielsweise auch eine Anpassung an lokal unterschiedliche Beladungen der Bodenplatte möglich, indem zum Beispiel die Anzahl an Versteifungsrippen im Bereich der höheren Beladung größer gewählt wird als in einem weniger beladenen Bereich. Entsprechend sind erfindungsgemäß am Einlegeboden mehrere Befestigungsmittel vorgesehen, an denen mehrere Versteifungsrippen lösbar befestigt werden können, aber nicht müssen. Die Anzahl an Befestigungsmöglichkeiten, mit denen jeweils eine Versteifungsrippe befestigt werden kann und die durch die Befestigungsmittel bereitgestellt werden, kann also größer sein als die Anzahl der tatsächlich befestigten Versteifungsrippen. Der Einlegeboden kann also in einigen Ausführungsformen auch Befestigungsmittel aufweisen, an denen keine Versteifungsrippe befestigt ist. Beispielsweise können 2 bis 8, bevorzugt 2 bis 6 und insbesondere 3 bis 5 Paare Befestigungsmittel vorhanden sein, sodass je nach Anforderung zwischen 2 und 8 (oder 2 bis 6 bzw. 3 bis 5) Versteifungsrippen verwendet werden können. Vorzugsweise verlaufen die Versteifungsrippen im Wesentlichen parallel zueinander, wobei ihre Längsachsen zweckmäßig nicht mehr als um ± 2° voneinander abweichen. Die Versteifungsrippen können auch so ausgestaltet sein, dass sie sich überkreuzen können (zum Beispiel durch Vorsehen von Einkerbungen im Verlauf der Versteifungsrippen, an denen zwei Versteifungsrippen sich überkreuzend ineinander gesteckt werden können), oder mehrere Versteifungsrippen sind von Anfang an als Gitter ausgebildet, das insgesamt am Einlegeboden lösbar befestigt werden kann.

Um eine Versteifungsrippe am Einlegeboden lösbar befestigen zu können, weist diese zweckmäßig Befestigungsmittel auf, die zu den am Einlegeboden vorgesehenen Befestigungsmitteln komplementär sind. Auf die verschiedenen Möglichkeiten der Rast-, Steck-, Klemm- oder Magnetverbindungen wurde bereits vorstehend hingewiesen. Am Einlegeboden befinden sich die Befestigungsmittel bevorzugt in oder an dessen äußerem Randbereich. In vielen Fällen sind Einlegeböden aus einem Metallblech gefertigt, das im Bereich der Außenränder der Bodenplatte umgebogen ist, um so einen Randbereich zu ergeben. Letzterer steht zum Beispiel senkrecht über die der Stellfläche gegenüberliegende Ober- und/oder Unterseite der Bodenplatte vor. Der Bereich, der sich an eine der Seitenkanten der Bodenplatte anschließt, wird als Randbereichsabschnitt bezeichnet. Für eine üblicherweise rechteckige Bodenplatte ergeben sich somit insgesamt vier Randbereichsabschnitte, die den Randbereich des Einlegebodens ausmachen. Die Randbereichsabschnitte können entweder alle auf der gleichen Seite der Bodenplatte angeordnet sein oder sich zu verschiedenen Seiten von der Bodenplatte weg erstrecken. Gegebenenfalls sind die freien Endbereiche der jeweiligen Randbereichsabschnitte nochmals - zum Beispiel nach innen, unter die Unterseite der Bodenplatte - abgekantet. Erfindungsgemäß ist es bevorzugt, die Befestigungsmittel des Einlegebodens möglichst weit am Rand der Bodenplatte und insbesondere in oder an dem Randbereich des Einlegebodens vorzusehen. Dazu kann vorteilhaft Material aus der Bodenplatte und/oder dem Randbereich zum Formen des Befestigungsmittels, beispielsweise einer über die Bodenplatte vorstehenden Lasche oder eines Rastvorsprungs, verwendet werden. Alternativ kann im Randbereich wenigstens eine Vertiefung oder Ausnehmung vorgesehen sein, in die ein komplementärer Steck- oder Rastvorsprung einer Versteifungsrippe eingreifen kann. Die Anordnung der Befestigungsmittel im oder am Randbereich hat außerdem den Vorteil, dass wenig oder gar kein Platz auf der Stellfläche von den Befestigungsmitteln verbraucht wird. Aus diesem Grund ist es ebenfalls bevorzugt, die Befestigungsmittel so anzuordnen, dass die wenigstens eine Versteifungsrippe auf der Unterseite der Bodenplatte zu liegen kommt. Die zur Befestigung der Versteifungsrippe benötigten Befestigungsmittel befinden sich zweckmäßig im Bereich von deren gegenüberliegenden Enden, was dazu führt, dass sich die Versteifungsrippe praktisch über ihre gesamte Länge über im Wesentlichen die gesamte Breite der Bodenplatte erstreckt, wenn sich die komplementären Befestigungsmittel im Randbereich des Einlegebodens befinden. Dadurch wird eine Durchbiegung besonders effektiv verhindert. Bevorzugt ist es, wenn die Versteifungsrippe mit wenigstens 80 %, bevorzugt mindestens 90 %, insbesondere mindestens 95 %, ihrer Länge an einem Abschnitt der Bodenplatte anliegt, der mindestens 80 %, bevorzugt mindestens 90 % und insbesondere mindestens 95 % der Breite der Bodenplatte ausmacht.

Erfindungsgemäß weist die wenigstens eine Versteifungsrippe auf ihrer zur Bodenplatte weisenden Seite in ihrer Längserstreckungsrichtung ein Höhenprofil auf. Das Höhenprofil ist zweckmäßig so ausgebildet, dass die Höhe der Versteifungsrippe in einem Mittelbereich am größten ist und zu den Seiten hin vorzugsweise kontinuierlich abnimmt. Wird die Versteifungsrippe so am Einlegeboden befestigt, dass die mit dem Höhenprofil versehene Seite an der Unterseite der Bodenplatte anliegt, wird die Bodenplatte in einem Mittelbereich zur Stellflächen-Seite nach oben hin aufgewölbt. Die Stellfläche ist also quasi in ihrem besonders leicht verformbaren Mittelbereich vorgespannt. Werden in diesem Bereich nun Gegenstände auf die Stellfläche gestellt, biegt sich die Bodenplatte unter deren Masse nach unten durch. Bei richtiger Auslegung des Höhenprofils in Abhängigkeit von der zu erwartenden Gewichtsbelastung der Bodenplatte sorgt die Vorspannung dafür, dass die Bodenplatte im belasteten Zustand eine ebene Fläche bildet und die Gegenstände auf ihr damit geradestehen. Diese Ausgestaltung eignet sich besonders für den Fall, dass relativ schwere Gegenstände auf der Bodenplatte gelagert werden sollen.

In einer Weiterbildung kann die Versteifungsrippe auf verschiedenen Seiten unterschiedliche Höhenprofile aufweisen, die für unterschiedliche Gewichtsbelastungen ausgelegt sind. In einer bevorzugten Variante ist zum Beispiel auf einer Seite der Versteifungsrippe ein Höhenprofil vorhanden, während die gegenüberliegende Seite eben ausgebildet ist. In allen der beschriebenen Fälle ist die Versteifungsrippe so ausgebildet, dass sie in unterschiedlichen Orientierungen lösbar an dem Einlegeboden befestigt werden kann. Je nach der beabsichtigten Beladung des Einlegebodens wird die Versteifungsrippe so gedreht, dass das gewünschte Höhenprofil in Richtung auf die Bodenplatte weist, und in dieser Orientierung am Einlegeboden befestigt.

Die Erfindung soll nachfolgend anhand von Zeichnungen näher erläutert werden. Die Zeichnungen dienen lediglich der Beschreibung einiger bevorzugter Ausführungsbeispiele der Erfindung, ohne dass die Erfindung auf diese Beispiele beschränkt wäre. Die Figuren in den Zeichnungen sind rein schematisch. Gleiche Teile werden mit gleichen Bezugszeichen bezeichnet, wobei nicht in allen Figuren alle Teile mit Bezugszeichen versehen sind. Im Einzelnen zeigen:
- Fig. 1: einen erfindungsgemäßen Klimaschrank in perspektivischer Darstellung;
- Fig. 2: ein Beispiel eines erfindungsgemäßen Einlegebodens bzw. Sets in perspektivischer Darstellung mit Blick auf seine Unterseite;
- Fig. 3 (a): eine perspektivische Detailansicht auf ein Ende einer Versteifungsrippe;
- Fig. 3 (b): eine zur Versteifungsrippe gemäß Fig. 3 (a) passende Befestigungslasche in Draufsicht;
- Fig. 4 (a): eine perspektivische Detailansicht eines Endes einer weiteren Versteifungsrippe;
- Fig. 4 (b): eine zur Versteifungsrippe gemäß Fig. 4 (a) passende Befestigungslasche in Draufsicht;
- Fig. 4 (c): eine weitere zur Versteifungsrippe gemäß Fig. 4 (a) passende Befestigungslasche in Draufsicht;
- Fig. 5: eine Schnittansicht entlang der Linie X-X in Figur 2;
- Fig. 6: eine erfindungsgemäße Versteifungsrippe in Seitenansicht;
- Fig. 7: ein Ausführungsbeispiel eines erfindungsgemäßen Sets mit Einlegeboden und Versteifungsrippe in perspektivischer Teilansicht;
- Fig. 8: zwei Versteifungsrippen in Teilansicht, die über Kreuz angeordnet werden können;
- Fig. 9: ein Einlegeboden des Standes der Technik mit darauf angeordneten Mikrotiterplatten in einer Teilschnittansicht und
- Fig. 10: eine Teilschnittansicht eines Einlegebodens des Standes der Technik mit Verstärkungselement.

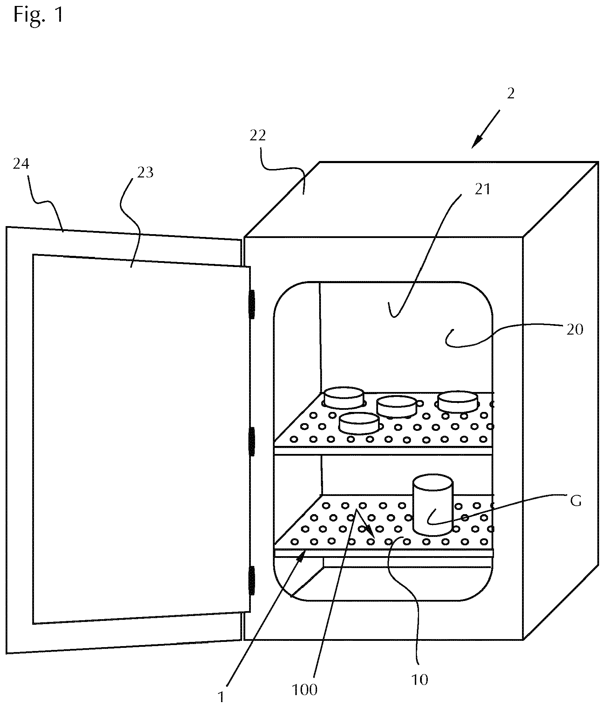

Figur 1 zeigt einen erfindungsgemäßen Klimaschrank 2, beispielsweise einen Inkubator. Der Klimaschrank weist eine Klimakammer 20 auf, die über eine frontseitige Öffnung 21 zugänglich und auf den übrigen Seiten von einem Gehäuse 22 umschlossen ist. Die Öffnung 21 kann mit einer üblicherweise aus Glas bestehenden Innentür 23 sowie einer Außentür 24 verschlossen werden. Der Klimaschrank entspricht in seinem Aufbau grundsätzlich den Klimaschränken des Standes der Technik, sodass er hier nicht weiter beschrieben werden muss. An den die Klimakammer 20 umgebenden Seitenwänden sind in ebenso grundsätzlich bekannter Art und Weise hier nicht dargestellte Halterungen vorhanden, an denen mehrere Einlegeböden 1 gehaltert werden können. Die Einlegeböden besitzen eine Bodenplatte 10, auf deren ebener Stellfläche 100 Gegenstände G, im gezeigten Fall Laborgeräte wie insbesondere Petrischalen oder Mikrotiterplatten, unter vorgegebenen Temperaturbedingungen gelagert werden können. Im Falle des dargestellten Inkubators kann in der Klimakammer zudem eine gewünschte Luftfeuchtigkeit sowie gegebenenfalls eine vorgegebene Gasatmosphäre eingestellt werden.

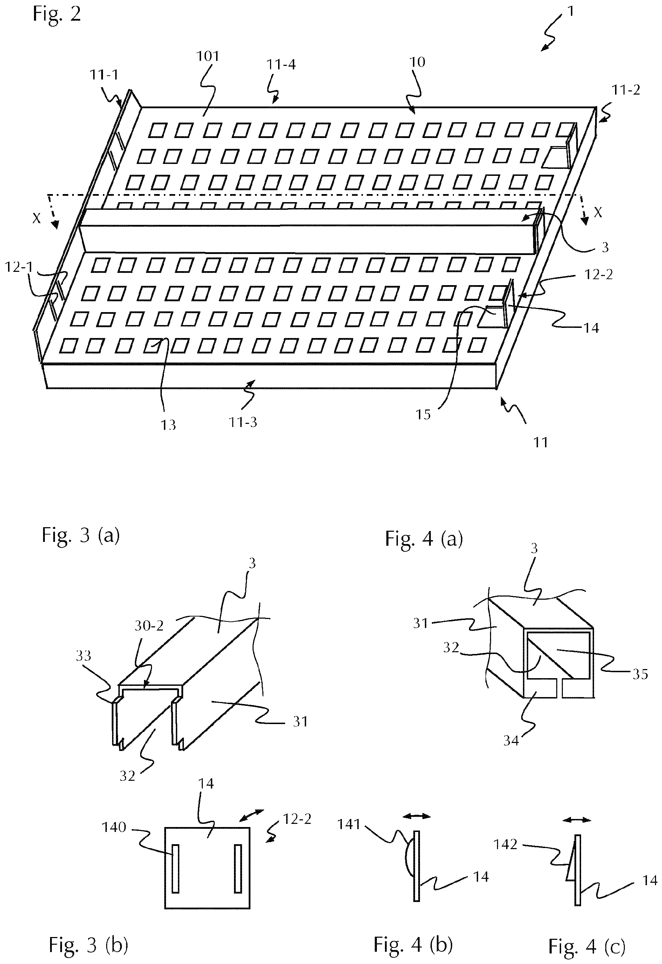

Zur Reinigung können die Einlegeböden 1 durch die Öffnung 21 aus der Klimakammer 20 entfernt werden. Ein Beispiel eines erfindungsgemäßen Einlegebodens 1 ist in Figur 2 gezeigt. Die Figur zeigt die Sicht auf die der Stellfläche 100 gegenüberliegende Unterseite 101 der Bodenplatte 10. Die Bodenplatte 10 ist mit einer Vielzahl von hier quadratischen Durchgangsöffnungen 13 versehen, die die Einstellung einer gleichmäßigen Atmosphäre in der Klimakammer 20 erleichtern. Der Einlegeboden 1 ist aus einem Metallblech, beispielsweise einem Edelstahlblech, gefertigt, das in seinem Randbereich 11 abgekantet wurde, um an den vier Seiten der Bodenplatte 10 Randbereichsabschnitte 11-1, 11-2, 11-3 und 11-4 zu ergeben, die im Wesentlichen senkrecht zur Ebene der Bodenplatte 10 stehen. Der Randabschnitt 11-1 ist dabei derjenige Abschnitt, der zur Frontöffnung 21 hin orientiert ist, wenn die Bodenplatte 1 in der Klimakammer 20 angeordnet ist. Er ist in Richtung zur Unterseite 101 der Bodenplatte 10 hin abgekantet, während die übrigen Randabschnitte 11-2 bis 11-4 in Richtung auf die Stellfläche 100 vorstehen. Die Trennschnitte zwischen den benachbarten Randabschnitten, die Durchgangsöffnungen 13 sowie weitere Schnitte im Metallblech werden vorzugsweise in einem gemeinsamen Arbeitsschritt, beispielsweise durch Stanzen oder Laserschneiden, in das Metallblech eingebracht.

Weitere Schnitte werden im gezeigten Beispiel in den Randbereichsabschnitt 11-1 eingebracht, um in der fertigen Bodenplatte drei Paare von senkrecht zur Ebene der Bodenplatte 10 verlaufenden schlitzförmigen Ausnehmungen zu erzeugen, die Befestigungsmittel 12-1 darstellen, an denen eine Versteifungsrippe 3 lösbar befestigt werden kann. Am gegenüberliegenden Randbereich 11-2 sind, den Befestigungsmitteln 12-1 jeweils gegenüber, entsprechende Befestigungsmittel 12-2 in Form im Wesentlichen rechteckiger Haltelaschen 14 vorhanden. Zu ihrer Herstellung wird ausgehend von der Seitenkante der Bodenplatte 10 die Kontur der Haltelasche 14 an drei Seiten aus der Bodenplatte freigetrennt und die Haltelasche 14 aus der Bodenplatte 10 herausgebogen, sodass sie senkrecht in Verlängerung des Randbereichsabschnitts 11-2 über diese vorsteht und in der Bodenplatte eine Öffnung 15 zurückbleibt. In die Fläche der Haltelasche wurde zuvor - zweckmäßig im gleichen Arbeitsschritt wie das Einbringen der weiteren Schnitte - ein Paar den Befestigungsmitteln 12-1 entsprechender schlitzförmiger Ausnehmungen eingebracht, die nach dem Herausbiegen der Haltelasche 14 senkrecht zur Ebene der Bodenplatte 10 verlaufen.

Figuren 3 (a) und (b) verdeutlichen die Ausgestaltung der Befestigungsmittel 30-2 an der Versteifungsrippe 3 und der Befestigungsmittel 12-2. Das nachfolgend Beschriebene gilt für das gegenüberliegende Paar Befestigungsmittel 12-1 und 30-1 analog, da die Befestigungsmittel 30-1 und 30-2 an den beiden Enden der Versteifungsrippe 3 gleich ausgebildet sind und sich die Einlegeboden-Befestigungsmittel 12-1 und 12-2 nur dadurch voneinander unterscheiden, dass die schlitzförmigen Ausnehmungen in ersterem Fall in dem durchgängigen Randbereichsabschnitt 11-1 liegen und nicht, wie in letzterem Fall, auf separaten Haltelaschen. Figur 3 (a) zeigt die Versteifungsrippe 3 aus Figur 2 im Bereich eines ihrer Enden. Wie erkennbar, ist die Versteifungsrippe als im Wesentlichen U-förmiges Profil ausgebildet. Die freien Schenkel 31 werden dabei bevorzugt so angeordnet, dass sie in Richtung auf die Bodenplatte 10 weisen, wenn die Versteifungsrippe 3 am Einlegeboden befestigt wird. Der Hohlraum 32 ist dann von der Versteifungsrippe 3 und der Bodenplatte 10 eingeschlossen. Zur Befestigung weist die Versteifungsrippe 3 an ihren Enden in Richtung ihrer Längserstreckungsrichtung vorstehende streifenförmige Vorsprünge 33 an den beiden Schenkeln 31 auf, welche die Befestigungsmittel 30-1 und, am gegenüberliegenden Ende, 30-2 der Versteifungsrippe bilden. Die Vorsprünge 33 sind so bemessen, dass sie in die schlitzförmigen Ausnehmungen der Befestigungsmittel 12-1 und 12-2 des Einlegebodens eingesteckt werden können. Die schlitzförmigen Ausnehmungen sind dabei gerade nur so groß, dass die Vorsprünge 33 in ihnen aufgenommen werden können und sich die befestigte Versteifungsrippe gegenüber dem Einlegeboden nur noch wenig oder gar nicht bewegen kann. Figur 3 (b) zeigt ein Einlegeboden-Befestigungsmittel 12-2, bei dem schlitzförmige Ausnehmungen 140 in eine Haltelasche 14 eingebracht wurden. Die Anordnung der schlitzförmigen Ausnehmungen der Befestigungsmittel 12-1 im Randbereichsabschnitt 11-1 ist, wie erwähnt, entsprechend.

Zur Befestigung einer Versteifungsrippe 3 am Einlegeboden 1 wird zunächst das zum Randbereichsabschnitt 11-1 hin orientierte Ende befestigt, indem die Vorsprünge 33 in die schlitzförmigen Ausnehmungen eines Befestigungsmittels 12-1 eingeführt werden. Anschließend wird das andere Ende der Versteifungsrippe 3 in Richtung auf die Bodenplatte 10 und die dem gewählten Befestigungsmittel 12-1 gegenüberliegende Haltelasche 14 hin bewegt, bis die Vorsprünge 33 mit der Halterlasche 14 in Kontakt kommen. Beim weiteren Andrücken der Versteifungsrippe 3 in Richtung auf die Bodenplatte 10 hin schieben die Vorsprünge 33 das freie Ende der Haltelasche 14 nach außen, da die Haltelasche 14 federnd ausgebildet ist, wie mit dem Pfeil in Figur 3 (b) angedeutet. Die Vorsprünge 13 schieben sich in die schlitzartigen Ausnehmungen 140 ein und die Haltelasche 14 federt in ihre Ausgangslage zurück, sodass die Versteifungsrippe 3 sicher an dem Einlegeboden 1 gehaltert ist. Zum Lösen der Versteifungsrippe 3 aus ihrer Befestigung kann die Haltelasche von den Vorsprüngen 33 weg etwas nach außen bewegt werden, sodass sich das zum Randabschnitt 11-2 hin orientierte Ende der Versteifungsrippe von der Haltelasche 14 lösen lässt. Anschließend wird das andere Ende vom Befestigungsmittel 12-1 abgenommen.

Im Beispiel der Figur 2 sind Befestigungsmittel zur Befestigung von bis zu drei Versteifungsrippen 3 vorgesehen. Wie viele Versteifungsrippen tatsächlich verwendet werden, kann vom Benutzer unter Berücksichtigung der beabsichtigten Beladung der Stellfläche 100 des Einlegebodens 1 nach Wunsch entschieden werden. Außerdem kann der Benutzer frei wählen, an welcher der drei vorgesehenen Befestigungsorte die wenigstens eine Versteifungsrippe befestigt wird. Es bedarf keiner weiteren Erklärung, dass die Durchbiegung der Bodenplatte 10 umso geringer ist, je größer die Anzahl der verwendeten Versteifungsrippen gewählt wird. Die in Figur 2 gezeigte Anordnung ist nicht nur ein Beispiel für einen erfindungsgemäßen Einlegeboden 1, sondern auch für ein erfindungsgemäßes Set aus einem Einlegeboden und wenigstens einer Versteifungsrippe. Zweckmäßig wird ein Set aber mindestens genau so viele Versteifungsrippen umfassen, wie Befestigungsmöglichkeiten an dem Einlegeboden vorhanden sind - im gezeigten Beispiel also mindestens drei Versteifungsrippen. Vorzugsweise werden dies drei gleichartige Versteifungsrippen sein, da so die Handhabung für den Benutzer vereinfacht wird. Grundsätzlich ist es jedoch auch denkbar, ein Set mit verschiedenen Arten von Versteifungsrippen zusammenzustellen. Die Versteifungsrippen können beispielsweise unterschiedlich biegesteif sein, sodass durch geeignete Auswahl der Versteifungsrippen eine noch flexiblere Anpassung an die beabsichtigte Beladung der Bodenplatte möglich ist.

Figur 4 zeigt alternative Möglichkeiten der lösbaren Befestigung der Versteifungsrippe am Einlegeboden. Wie in Figur 3 (a) ist die in Figur 4 (a) dargestellte Versteifungsrippe 3 als im Wesentlichen U-förmiges Profil ausgebildet, das mit den freien Enden der Schenkel 31 in Richtung auf die Bodenplatte 10 des Einlegeboden 1 hin ausgerichtet wird. An den beiden Enden der Versteifungsrippe 3 ist an den freien Enden der Schenkel 31 jeweils eine rechteckige Lasche 34 senkrecht zur Ebene der Schenkel vor den Hohlraum 32 gebogen. Dadurch ergibt sich am Ende des Hohlraums 32 ein Sperrriegel mit einer darüber liegenden fensterartigen Öffnung 35. Die fensterartige Öffnung 35 dient der Aufnahme eines Rastvorsprungs des Einlegebodens. Beispiele geeigneter Rastvorsprünge sind in Figuren 4 (b) und (c) gezeigt. Beide Figuren zeigen die Rastvorsprünge an einer Haltelasche 14 ausgebildet. Entsprechende Rastvorsprünge können sich auch im Bereich des gegenüberliegenden Randabschnitts 11-1 befinden. Alternativ kann auch eine andere Befestigungsart wie beispielsweise die in Figur 2 gezeigte Steckverbindung im Randbereich 11-1 verwendet werden. In Figur 4 (b) ist der Rastvorsprung als Kalotte 141 ausgebildet, die aus der Ebene der Haltelasche 14 herausgeformt ist. In Figur 4 (c) ist der Rastvorsprung als Rastnase 142 ausgebildet. Beim Aufsetzen der Versteifungsrippe 3 gleiten die umgebogenen rechteckigen Laschen 34 an der Haltelasche 14 und dem Rastvorsprung 141 bzw. 142 entlang und biegen die Haltelasche 14 nach außen auf, bis die Laschen 34 ganz am Rastvorsprung vorbeigeschoben sind. Danach federt die Haltelasche in ihre Ausgangsposition zurück, wie mit den Doppelpfeilen veranschaulicht, und rastet die Versteifungsrippe 3 an der Haltelasche 14 ein. Zum Lösen der Versteifungsrippe 3 vom Einlegeboden 1 kann die Haltelasche 14 etwas nach außen bewegt werden, sodass die Laschen 34 am Rastvorsprung vorbeigleiten können.

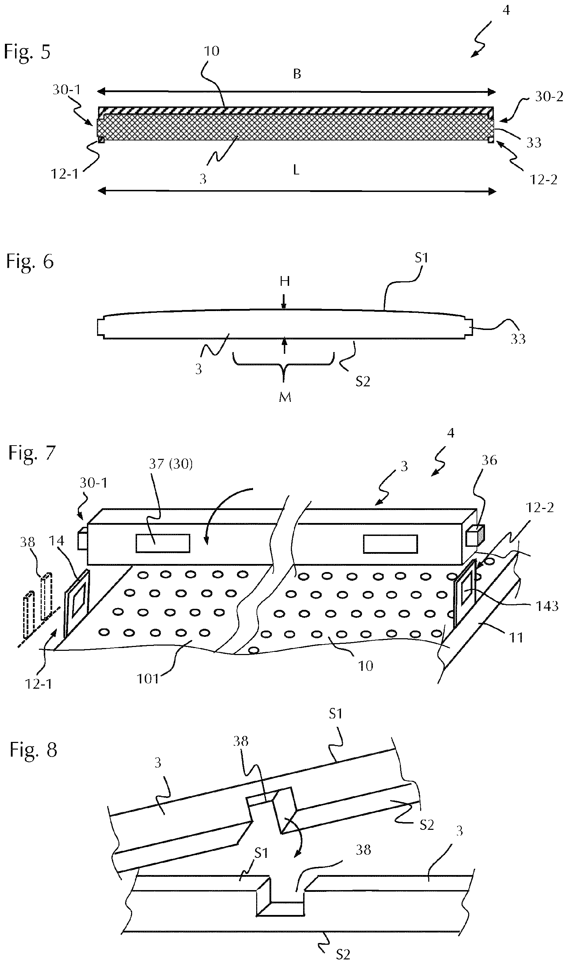

Figur 5 zeigt einen Querschnitt entlang der Linie X-X in Figur 2 im Bereich durch einen der Schenkel 31 sowie an dessen Enden befindliche Vorsprünge 33 der Versteifungsrippe 3. Wie erkennbar, erstreckt sich die Versteifungsrippe 3 mit ihrer Länge L über die gesamte Breite B der Bodenplatte 10. Die freie Kante des Schenkels 31 liegt an der Unterseite 101 der Bodenplatte 10 an. Die Vorsprünge 33 sind in die Schlitze der Befestigungsmittel 12-1 im Randbereichsabschnitt 11-1 bzw. 12-2 einer Haltelasche 14 am Randbereichsabschnitt 11-2 eingesteckt, sodass die Versteifungsrippe mittels der Steckverbindungen an der Bodenplatte 10 gehalten wird. Wird die Stellfläche 100 der Bodenplatte 10 mit Gegenständen belastet, versteift die Versteifungsrippe 3 die Bodenplatte 10 und vermindert deren Durchbiegung unter dem Gewicht der Gegenstände.

Sind die Gegenstände, mit denen die Bodenplatte 10 beladen werden soll, besonders schwer, bietet sich die Verwendung einer Versteifungsrippe 3 an, wie sie in Figur 6 dargestellt ist. Diese Versteifungsrippe ähnelt in ihrem Grundaufbau derjenigen der Figuren 2, 3 (a) und 5 und besitzt ebenfalls ein U-förmiges Profil. Während die von der Bodenplatte abgewandte Seite S2 der Versteifungsrippe eben verläuft, ist in der der Bodenplatte 10 zugewandten Seite S1 ein Höhenprofil ausgebildet. Die Höhe H - der Abstand zwischen den Seiten S1 und S2 - nimmt dabei kontinuierlich von den die Vorsprünge 33 tragenden Enden der Versteifungsrippe 3 in Richtung auf einen Mittelbereich M hin zu und ist in der Mitte der Versteifungsrippe 3 am größten. Besonders leicht lässt sich das Höhenprofil herstellen, wenn die Seite S1 diejenige ist, an der sich die freien Enden der Schenkel 31 des U-förmigen Profils befinden. In diesem Fall kann das Höhenprofil bereits beim Freischneiden der Grundform aus einem Metallblech eingearbeitet werden. Wird die Versteifungsrippe 3 in der beschriebenen Art und Weise am Einlegeboden befestigt, bewirkt das Höhenprofil auf der Seite S1 eine leichte Aufwölbung der Bodenplatte 10, wobei die Stellfläche 100 im Mittelbereich - dem am leichtesten verformbaren Bereich der Bodenplatte - am weitesten nach oben gewölbt wird. Werden Gegenstände auf die Stellfläche gestellt, biegt sich die Bodenplatte 10 unter dem Gewicht der Gegenstände wieder zurück. Das Höhenprofil der Versteifungsrippe wird zweckmäßig unter Berücksichtigung des Gewichts der Gegenstände so vorgegeben, dass die Bodenplatte nach der vorgesehenen Beladung mit den Gegenständen dann im Wesentlichen wieder eben ist.

Figur 7 zeigt eine weitere Möglichkeit der Ausbildung der Befestigungsmittel 12-1, 12-2 und 30-1, 30-2 zur lösbaren Befestigung einer Versteifungsrippe 3 am Einlegeboden 1. Die Versteifungsrippe 3 ist diesmal in Form eines Kantrohrs ausgebildet, an dessen Enden quaderförmige Vorsprünge 36 als Befestigungsmittel 30-1 und 30-2 angeordnet sind. Zusätzlich sind auf einer Seite des Kantrohrs zwei Permanentmagneten 37 als weitere Befestigungsmittel 30 angebracht. In gegenüberliegenden Randbereichen 11 der Bodenplatte 10 sind Haltelaschen 14 über die Unterseite 101 vorstehend angeordnet. In den Haltelasche 14 ist jeweils eine rechteckige Öffnung 143 vorgesehen, die einen der quaderförmigen Vorsprünge der Versteifungsrippe 3 aufnehmen kann. Beim Einschieben und Entnehmen der Versteifungsrippe können die Haltelaschen 14 nach außen auffedern, wie bereits vorstehend beschrieben. Die Versteifungsrippe wird so gedreht, dass die Permanentmagneten 37 im montierten Zustand zur Bodenplatte 10 weisen. Besteht Letztere aus einem geeigneten Metall wie beispielsweise Stahl, bildet sich eine magnetische Halterung zwischen Bodenplatte und Versteifungsrippe aus. Grundsätzlich ist es denkbar, wenn auch weniger bevorzugt, die Versteifungsrippe ausschließlich magnetisch an der Bodenplatte 10 zu befestigen. Die Haltelaschen 14 könnten also auch vollständig weggelassen werden. Eine andere Möglichkeit besteht darin, anstelle der Haltelaschen seitliche Streben 38 zu verwenden, zwischen die die quaderförmigen Vorsprünge 36 eingeschoben werden können, um die Vorsprünge seitlich zu begrenzen und die Versteifungsrippe zu positionieren (gestrichelt neben der linken Lasche eingezeichnet).

Figur 8 verdeutlicht eine Möglichkeit, wie mehrere Versteifungsrippen nicht nur parallel zueinander, sondern auch über Kreuz zur Stabilisierung der Bodenplatte verwendet werden können. Dazu weisen die Versteifungsrippen auf einer ihrer Seiten eine Kerbe oder Nut 38 auf. Im gezeigten Beispiel sind die Nuten 38 quaderförmig derart ausgebildet, dass die Versteifungsrippen im Bereich der Nuten über Kreuz ineinander gesteckt werden können. Die Oberflächen S1 und S2 beider Versteifungsrippen schließen im zusammengesteckten Zustand bündig ab. Über die Länge einer Versteifungsrippe können in geeigneten Abständen auch mehrere Nuten eingebracht sein, wenn mehrere Versteifungsrippen einander kreuzen sollen. Auf diese Weise wird ein Gitter von Versteifungsrippen erhalten, das für eine besonders gute Stabilisierung der Bodenplatte sorgt und sich vor allem für sehr große Bodenplatten eignet. Die Befestigung der Versteifungsrippen am Einlegeboden erfolgt auf die vorstehend beschriebene Art und Weise, wobei in diesem und in allen anderen Fällen auch Kombinationen von unterschiedlichen Befestigungsmitteln eingesetzt werden können.

## Patentansprüche

1. Klimaschrank (2), welcher wenigstens einen Einlegeboden (1) aufweist, der in einer Klimakammer (20) des Klimaschrankes (2) gehaltert ist, wobei der Einlegeboden (1) eine Bodenplatte (10) umfasst, die eine Stellfläche (100) für im Klimaschrank (2) zu behandelnde Gegenstände (G) sowie eine der Stellfläche (100) gegenüberliegende Unterseite (101) aufweist, und wenigstens eine Versteifungsrippe (3) an dem Einlegeboden befestigt ist,
wobei die wenigstens eine Versteifungsrippe (3) lösbar befestigt ist,
**dadurch gekennzeichnet, dass** die Versteifungsrippe (3) auf einer zur Bodenplatte (10) weisenden Seite (S1) in ihrer Längserstreckungsrichtung ein Höhenprofil aufweist, wobei in einem Mittelbereich (M) die Höhe (H) am größten ist und zu den Seiten hin kontinuierlich abnimmt, und wobei die mit dem Höhenprofil versehene Seite an der Unterseite der Bodenplatte (10) anliegt.

2. Klimaschrank nach Anspruch 1,
**dadurch gekennzeichnet,**
**dass** die wenigstens eine Versteifungsrippe (3) zwischen gegenüberliegenden Randbereichsabschnitten (11-1, 11-2) des Einlegebodens (1) verläuft.

3. Klimaschrank nach Anspruch 1 oder 2,
**dadurch gekennzeichnet,**
**dass** die wenigstens eine Versteifungsrippe (3) am Einlegeboden (1) verklemmt, verrastet, eingesteckt und/oder magnetisch befestigt ist.

4. Klimaschrank nach Anspruch 3,
**dadurch gekennzeichnet,**
**dass** komplementäre Befestigungsmittel (12-1, 12-2; 30-1, 30-2) in oder an gegenüberliegenden Randbereichsabschnitten (11-1, 11-2) des Einlegebodens (1) sowie im Bereich der gegenüberliegenden Enden der wenigstens einen Versteifungsrippe (3) vorgesehen sind.

5. Klimaschrank nach einem der vorhergehenden Ansprüche,
**dadurch gekennzeichnet,**
**dass** mehrere und insbesondere 2 bis 8, bevorzugt 2 bis 6 und besonders bevorzugt 3 bis 5, Versteifungsrippen (3) voneinander beabstandet und bevorzugt im Wesentlichen parallel zueinander verlaufend am Einlegeboden befestigt sind.

6. Klimaschrank nach einem der vorhergehenden Ansprüche,
**dadurch gekennzeichnet,**
**dass** er eine größere Anzahl an Befestigungsmöglichkeiten für Versteifungsrippen (3) aufweist als Versteifungsrippen (3) an ihm lösbar befestigt sind.

7. Klimaschrank nach einem der vorhergehenden Ansprüche,
**dadurch gekennzeichnet,**
**dass** die wenigstens eine Versteifungsrippe (3) wenigstens eines der folgenden Merkmale aufweist:
- sie liegt über im Wesentlichen ihre gesamte Länge (L) an der Bodenplatte (10) an,
- sie ist im Wesentlichen stabförmig, bevorzugt als Hohlstab und insbesondere als Hohlkantstab, ausgebildet,
- sie ist als Profil ausgebildet, insbesondere als L-Profil oder U-förmiges Profil, dessen freie Enden bevorzugt in Richtung auf die Bodenplatte (10) weisen,
- sie besteht aus einem Metall, vorzugsweise Edelstahl.

8. Klimaschrank nach einem der vorhergehenden Ansprüche,
**dadurch gekennzeichnet,**
**dass** die Seite (S2) der Versteifungsrippe (3), welche der das Höhenprofil aufweisenden Seite (S1) gegenüberliegt, eben ausgebildet ist und die Versteifungsrippe (3) bevorzugt so mit Befestigungsmitteln (30-1, 30-2) versehen ist, dass sie sowohl mit der ebenen Seite (S2) als auch mit der mit einem Höhenprofil versehenen Seite (S1) in Richtung auf die Bodenplatte (10) hin an dem Einlegeboden (1) befestigt werden kann.

9. Klimaschrank nach einem der vorhergehenden Ansprüche,
**dadurch gekennzeichnet,**
**dass** er wenigstens eine der folgenden Eigenschaften aufweist:
- eine Vielzahl von Durchgangsöffnungen (13) in der Bodenplatte (10),
- aus einem Metall, insbesondere Edelstahl, bestehend.

10. Klimaschrank nach einem der vorhergehenden Ansprüche, wobei der Klimaschrank ein Trockenschrank
oder ein Inkubator ist.

## Claims

1. Climatic cabinet (2) which comprises at least one shelf (1) which is held in a climatic chamber (20) of the climatic cabinet (2), the shelf (1) having a base plate (10) which comprises a placement surface (100) for objects (G) to be treated in the climatic cabinet (2) and an underside (101) opposite the placement surface (100), and at least one reinforcing rib (3) being fastened to the shelf, the at least one reinforcing rib (3) being detachably fastened, **characterized in that** the reinforcing rib (3), in the longitudinal direction thereof, has a height profile on a side (S1) facing the base plate (10), the height (H) being greatest in a central region (M) and decreasing continuously toward the sides, and the side provided with the height profile resting against the underside of the base plate (10).

2. Climatic cabinet according to claim 1,
**characterized in that** the at least one reinforcing rib (3) extends between opposite edge region portions (11-1, 11-2) of the shelf (1).

3. Climatic cabinet according to either claim 1 or claim 2,
**characterized in that** the at least one reinforcing rib (3) is clamped, locked, inserted and/or magnetically fastened to the shelf (1).

4. Climatic cabinet according to claim 3,
**characterized in that** complementary fastening means (12-1, 12-2; 30-1, 30-2) are provided in or on opposite edge region portions (11-1, 11-2) of the shelf (1) and in the region of the opposite ends of the at least one reinforcing rib (3).

5. Climatic cabinet according to any of the preceding claims,
**characterized in that** a plurality, and in particular 2 to 8, preferably 2 to 6, and particularly preferably 3 to 5, reinforcing ribs (3) are mutually spaced and are fastened to the shelf preferably so as to extend substantially in parallel with one another.

6. Climatic cabinet according to any of the preceding claims,
**characterized in that** it comprises a greater number of fastening options for reinforcing ribs (3) than the number of reinforcing ribs (3) detachably fastened thereto.

7. Climatic cabinet according to any of the preceding claims,
**characterized in that** the at least one reinforcing rib (3) comprises at least one of the following features:
- it rests against the base plate (10) over substantially its entire length (L),
- it is designed to be substantially rod-shaped, preferably as a hollow rod and in particular as a hollow edged rod,
- it is designed as a profile, in particular as an L-profile or U-shaped profile, of which the free ends preferably face toward the base plate (10),
- it consists of a metal, preferably stainless steel.

8. Climatic cabinet according to any of the preceding claims,
**characterized in that** the side (S2) of the reinforcing rib (3) that is opposite the side (S1) having the height profile is designed to be flat, and the reinforcing rib (3) is preferably provided with fastening means (30-1, 30-2)
so that said rib can be fastened to the shelf (1) both with the flat side (S2) and with the side (S1) provided with a height profile facing toward the base plate (10).

9. Climatic cabinet according to any of the preceding claims,
**characterized in that** it comprises at least one of the following characteristics:
- a plurality of through-openings (13) in the base plate (10),
- it is made of a metal, in particular stainless steel.

10. Climatic cabinet according to any of the preceding claims, wherein the climatic cabinet is a drying cabinet or an incubator.

## Revendications

1. Armoire de climatisation (2), laquelle présente au moins une tablette de rayonnage (1) qui est maintenue dans une chambre de climatisation (20) de l'armoire de climatisation (2), dans laquelle la tablette de rayonnage (1) comprend une plaque de fond (10) qui présente une surface de pose (100) pour des objets (G) à traiter dans l'armoire de climatisation (2) et un côté inférieur (101) opposé à la surface de pose (100), et au moins une nervure de raidissement (3) est fixée à la tablette de rayonnage, dans laquelle l'au moins une nervure de raidissement (3) est fixée de manière amovible, **caractérisée en ce que** la nervure de raidissement (3) présente un profil en hauteur dans sa direction d'extension longitudinale sur un côté (S1) tourné vers la plaque de fond (10), dans laquelle la hauteur (H) est à son maximum dans une zone centrale (M) et diminue de façon continue vers les côtés, et dans laquelle le côté muni du profil en hauteur repose sur le côté inférieur de la plaque de fond (10).

2. Armoire de climatisation selon la revendication 1,
**caractérisée en ce**
**que** l'au moins une nervure de raidissement (3) s'étend entre des sections de zone de bord (11-1, 11-2) opposées de la tablette de rayonnage (1).

3. Armoire de climatisation selon la revendication 1 ou 2,
**caractérisée en ce**
**que** l'au moins une nervure de raidissement (3) est serrée, encliquetée, insérée et/ou fixée magnétiquement à la tablette de rayonnage (1).

4. Armoire de climatisation selon la revendication 3,
**caractérisée en ce**
**que** des moyens de fixation (12-1, 12-2 ; 30-1, 30-2) complémentaires sont prévus dans ou sur des sections de zone de bord (11-1, 11-2) opposées de la tablette de rayonnage (1) ainsi que dans la zone des extrémités opposées de l'au moins une nervure de raidissement (3).

5. Armoire de climatisation selon l'une des revendications précédentes,
**caractérisée en ce**
**que** plusieurs nervures de raidissement (3), en particulier 2 à 8, de préférence 2 à 6 et de manière particulièrement préférée 3 à 5, sont espacées les unes des autres et sont de préférence fixées à la tablette de rayonnage de manière sensiblement parallèle les unes aux autres.

6. Armoire de climatisation selon l'une des revendications précédentes,
**caractérisée en ce**
**qu'**elle présente un plus grand nombre de possibilités de fixation pour les nervures de raidissement (3) que de nervures de raidissement (3) qui sont fixées à elle de manière amovible.

7. Armoire de climatisation selon l'une des revendications précédentes,
**caractérisée en ce**
**que** l'au moins une nervure de raidissement (3) présente au moins l'une des caractéristiques suivantes :
- elle repose, sensiblement sur toute sa longueur (L), contre la plaque de fond (10),
- elle est sensiblement en forme de barre, de préférence réalisée sous forme de barre creuse et en particulier sous forme de barre carrée creuse,
- elle est réalisée sous forme de profilé, en particulier sous forme de profilé en L ou de profilé en forme de U, dont les extrémités libres sont orientées de préférence en direction la plaque de fond (10),
- elle est constituée de métal, de préférence d'acier inoxydable.

8. Armoire de climatisation selon l'une des revendications précédentes,
**caractérisée en ce**
**que** le côté (S2) de la nervure de raidissement (3), qui est opposé au côté (S1) présentant le profil en hauteur, est réalisé plat et la nervure de raidissement (3) est de préférence pourvue de moyens de fixation (30-1, 30-2) de manière à pouvoir être fixée à la tablette de rayonnage (1) en direction de la plaque de fond (10), aussi bien par le côté plat (S2) que par le côté (S1) pourvu d'un profil en hauteur.

9. Armoire de climatisation selon l'une des revendications précédentes,
**caractérisée en ce**
**qu'**elle présente au moins l'une des propriétés suivantes :
- une pluralité d'ouvertures traversantes (13) dans la plaque de fond (10),
- elle est constituée de métal, en particulier d'acier inoxydable.

10. Armoire de climatisation selon l'une des revendications précédentes, dans laquelle l'armoire de climatisation est une armoire de séchage ou un incubateur.
